# EUROPEAN PATENT APPLICATION

(11) **EP 4 819 028 A1**
(43) Date of publication of application: **07.10.2026**
(21) Application number: 25206133.8
(22) Date of filing: 01.10.2025
(51) Int. Cl.: G06Q 50/18

(54) **INFORMATION PROCESSING SYSTEM, INFORMATION PROCESSING PROGRAM, AND INFORMATION PROCESSING METHOD**

(30) Priority: 01.04.2025 JP 2025060402
(71) Applicant: FUJIFILM Business Innovation Corp., Minato-ku Tokyo (JP)
(72) Inventor: OGINO, Ken, Tokyo (JP); KOMAKI, Nobutaka, Yokohama-shi, Kanagawa (JP); YONEDA, Shigeru, Yokohama-shi, Kanagawa (JP)
(74) Representative: Becker Kurig & Partner Patentanwälte mbB

(57) **Abstract**

An information processing system includes a processor configured to extract, from an image, partial images corresponding to components of the image, as objects, and output, for each of the objects, infringement information indicating whether or not an infringement of intellectual property rights against an existing intellectual property is recognized.

## Description

### BACKGROUND OF THE INVENTION

### (i) Field of the Invention

The present disclosure relates to an information processing system, an information processing program, and an information processing method.

### (ii) Description of Related Art

JP2004-519763A discloses a system that operates and manages use rights adapted to be associated with digital content, the system including a rights module that operates to designate a use method, a condition module that operates to designate one or more conditions necessary for implementing the use method, and an offer module that operates to combine one or more rights designated by the rights module and one or more conditions designated by the condition module to create a rights offer object of the use rights and a related condition necessary for implementing the use method indicated by the use rights.

### SUMMARY OF THE INVENTION

For example, a generated image may be published on the Internet or the like. In this case, the image may include contents that unintentionally infringe the intellectual property rights of others.

Even in a case where a search for similar image in the world is performed on image search sites, the search for similar image is performed based on an atmosphere of the entire image on image search sites in the related art. For this reason, even though there is an image partially including an object, which infringes the intellectual property rights of others, an image similar to the object may not be searched for.

An object of the present disclosure is to provide an information processing system, an information processing program, and an information processing method capable of determining whether or not an image includes an element that infringes intellectual property rights.

According to a first aspect of the present disclosure, there is provided an information processing system including a processor configured to extract, from an image, partial images corresponding to components of the image, as objects, and output, for each of the objects, infringement information indicating whether or not an infringement of intellectual property rights against an existing intellectual property is recognized.

According to a second aspect of the present disclosure, there is provided the information processing system according to the first aspect, in which the processor may be configured to acquire, from a storage device, information related to the intellectual property, and compare a feature of the object with a feature of the intellectual property represented by the information related to the intellectual property to specify the intellectual property for which the object is likely to infringe the intellectual property rights.

According to a third aspect of the present disclosure, there is provided the information processing system according to the second aspect, in which the information related to the intellectual property may include an image of the intellectual property, and the processor may be configured to compare the object with the image of the intellectual property to specify the intellectual property for which the object is likely to infringe the intellectual property rights.

According to a fourth aspect of the present disclosure, there is provided the information processing system according to the second aspect, in which the information related to the intellectual property may include a description sentence of the intellectual property, and the processor may be configured to compare a description sentence of the object with the description sentence of the intellectual property to specify the intellectual property for which the object is likely to infringe the intellectual property rights.

According to a fifth aspect of the present disclosure, there is provided the information processing system according to the fourth aspect, in which the processor may be configured to generate, from the description sentence of the object, a similar sentence that is a sentence for evoking the feature of the object and that has a different expression from the description sentence of the object, and compare the similar sentence with the description sentence of the intellectual property to specify the intellectual property for which the object is likely to infringe the intellectual property rights.

According to a sixth aspect of the present disclosure, there is provided the information processing system according to the fifth aspect, in which the similar sentence may be a sentence that generates the object represented by the similar sentence in a case where the similar sentence is input to a generation model in which an image is generated from a text.

According to a seventh aspect of the present disclosure, there is provided the information processing system according to any one of the fourth to sixth aspects, in which the processor may be configured to, in a case where the description sentence of the object includes a predetermined expression for evoking the intellectual property, output that the object infringes the intellectual property rights of the intellectual property, which is evoked by the predetermined expression.

According to an eighth aspect of the present disclosure, there is provided the information processing system according to any one of the first to seventh aspects, in which the processor may be configured to output, for each object whose infringement of the intellectual property rights is recognized, a degree of infringement of the intellectual property rights against the intellectual property.

According to a ninth aspect of the present disclosure, there is provided the information processing system according to the eighth aspect, in which the processor may be configured to set the degree of infringement for each object in accordance with a type of the intellectual property rights of the intellectual property.

According to a tenth aspect of the present disclosure, there is provided the information processing system according to the ninth aspect, in which the processor may be configured to, in a case where the intellectual property is a work, adjust the degree of infringement in accordance with a popularity of the work.

According to an eleventh aspect of the present disclosure, there is provided the information processing system according to the tenth aspect, in which the processor may be configured to set the popularity of the work in accordance with the number of search hits in a case where at least one of a name of the work or an author name is searched for on a search site.

According to a twelfth aspect of the present disclosure, there is provided the information processing system according to any one of the eighth to eleventh aspects, in which the processor may be configured to use at least one of the number of dispute cases targeting the intellectual property or the number of dispute cases in which a rights holder of the intellectual property is involved to adjust the degree of infringement set according to a type of the intellectual property rights.

According to a thirteenth aspect of the present disclosure, there is provided the information processing system according to any one of the eighth to twelfth aspects, in which the processor may be configured to, in a case where the intellectual property is a predetermined specific intellectual property that has already spread in society, adjust the degree of infringement to be lower than the degree of infringement set according to a type of the intellectual property rights.

According to a fourteenth aspect of the present disclosure, there is provided an information processing program for causing a computer to execute a process including extracting, from an image, partial images corresponding to components of the image, as objects, and outputting, for each of the objects, infringement information indicating whether or not an infringement of intellectual property rights against an existing intellectual property is recognized.

According to a fifteenth aspect of the present disclosure, there is provided an information processing method including extracting, from an image, partial images corresponding to components of the image, as objects, and outputting, for each of the objects, infringement information indicating whether or not an infringement of intellectual property rights against an existing intellectual property is recognized.

According to the first aspect, the fourteenth aspect, and the fifteenth aspect of the present invention, there is an effect that determination can be made whether or not the image includes the element that infringes the intellectual property rights.

According to the second aspect of the present invention, there is an effect that determination can be made whether or not the intellectual property rights are infringed for each object of the image.

According to the third aspect of the present invention, there is an effect that determination can be made whether or not the object infringes the intellectual property rights based on the image.

According to the fourth aspect of the present invention, there is an effect that determination can be made whether or not the object infringes the intellectual property rights based on the sentence expressing the object.

According to the fifth aspect of the present invention, there is an effect that determination can be accurately made whether or not the object infringes the intellectual property rights, as compared with a case where the description sentence of the object is used for comparison with the description sentence of the intellectual property.

According to the sixth aspect of the present invention, there is an effect that the expression of the similar sentence is brought closer to the expression that can evoke the object.

According to the seventh aspect of the present invention, there is an effect that determination can be made that the object infringes the intellectual property rights without calculating the similarity degree between the description sentence of the object and the description sentence of the intellectual property.

According to the eighth aspect of the present invention, there is an effect that the user can check the degree of infringement of the intellectual property rights.

According to the ninth aspect of the present invention, there is an effect that the accuracy of the degree of infringement can be improved, as compared with a case where the degree of infringement is set regardless of the type of the intellectual property rights.

According to the tenth aspect of the present invention, there is an effect that the accuracy of the degree of infringement can be improved, as compared with a case where the same degree of infringement is set for any work.

According to the eleventh aspect of the present invention, there is an effect that the popularity of the work can be quantitatively set.

According to the twelfth aspect of the present invention, there is an effect that the degree of infringement of the intellectual property rights can be set from a viewpoint different from the similarity degree of the object.

According to the thirteenth aspect of the present invention, there is an effect that, even in a case where the object is similar to an object having the intellectual property rights, the degree of infringement of the intellectual property rights can be adjusted according to an actual use in society.

### BRIEF DESCRIPTION OF THE DRAWINGS

Exemplary embodiment(s) of the present invention will be described in detail based on the following figures, wherein:
FIG. 1 is a diagram showing a functional configuration example of an information processing system;
FIG. 2 is a diagram showing an example of objects extracted from an input image;
FIG. 3 is a table showing an example of rights information stored in an intellectual property database;
FIG. 4 is a diagram showing a main configuration example of an electrical system of the information processing system;
FIG. 5 is a flowchart showing an example of a flow of infringement determination processing of the input image;
FIG. 6 is a table showing an example of rights information stored in an intellectual property database according to a modification example of the information processing system; and
FIG. 7 is a flowchart showing an example of a flow of the infringement determination processing of the input image according to the modification example of the information processing system.

### DETAILED DESCRIPTION OF THE INVENTION

Hereinafter, the present exemplary embodiment will be described with reference to drawings. In addition, identical reference numerals will be assigned to identical components and identical processing throughout the drawings, and redundant description will be omitted. Dimensional ratios in the drawings are exaggerated for convenience of description, and may differ from actual ratios.

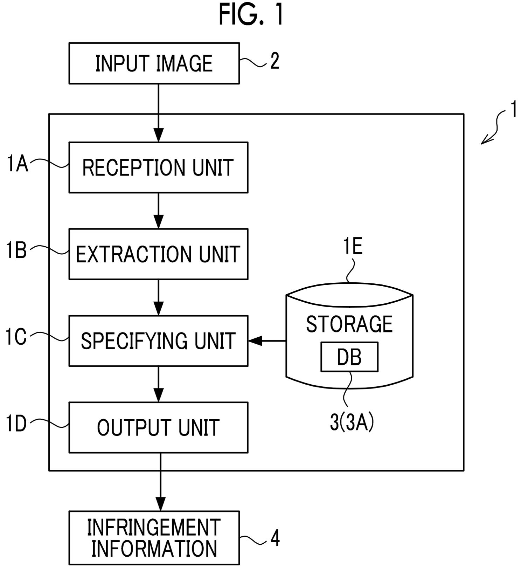

FIG. 1 is a diagram showing a functional configuration example of an information processing system 1 according to the present disclosure. The information processing system 1 determines whether or not an image includes an element that infringes existing intellectual property rights. In the following, the "information processing system 1" will be simply represented as "system 1".

The system 1 includes respective functional units of a reception unit 1A, an extraction unit 1B, a specifying unit 1C, and an output unit 1D, and a storage 1E storing data.

The reception unit 1A receives, for example, an image. There is no restriction on a type of image received by the reception unit 1A. The image may be an illustration or a photograph, and may be a monochrome image or a color image. Further, the image may be generated by a generative artificial intelligence (AI). As an example, the image according to the present disclosure is assumed to be used for an advertisement. In order to distinguish the image received by the reception unit 1A from other images, the image received by the reception unit 1A will be represented as "input image 2".

The extraction unit 1B extracts an object 5 from the input image 2 received by the reception unit 1A. The object 5 is a partial image of the input image 2, which corresponds to each component constituting the input image 2.

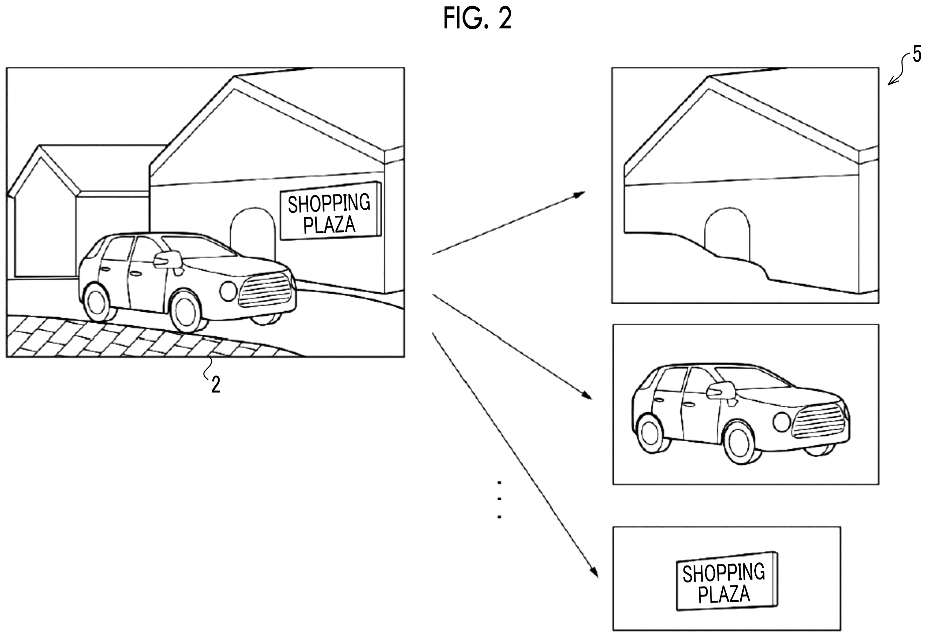

FIG. 2 is a diagram showing an example of objects 5 extracted from the input image 2. The input image 2 shown in FIG. 2 represents a vehicle traveling in front of a building made of bricks. As described above, the input image 2 is composed of a set of individual objects. The partial images corresponding to the individual objects included in the input image 2 are the objects 5. That is, the input image 2 shown in FIG. 2 includes, as the objects 5, the building made of bricks, the vehicle, a road, a sidewalk, and the like. Further, in a case where attention is paid to the building made of bricks, a signboard displaying "shopping plaza" is posted on the building. Therefore, the signboard is also an example of the object 5.

The specifying unit 1C in FIG. 1 compares a feature of each object 5 extracted from the input image 2 by the extraction unit 1B with a feature of the existing intellectual property to specify whether or not the object 5 may infringe the intellectual property rights of the existing intellectual property.

The intellectual property according to the present disclosure includes inventions, ideas, new varieties of plants, designs, works, and other things created by human creative activities, and trademarks, trade names, and other indications of goods or services used in business activities. Further, the intellectual property rights according to the present disclosure refer to rights established by law and rights relating to legally protected interests, regarding patent rights, utility model rights, breeder's rights, design rights, copyrights, trademark rights, and other intellectual properties.

Information related to the existing intellectual property is stored in advance in an intellectual property database 3. In the following, the "database" will be represented as "DB". The "DB" is an abbreviation for "database".

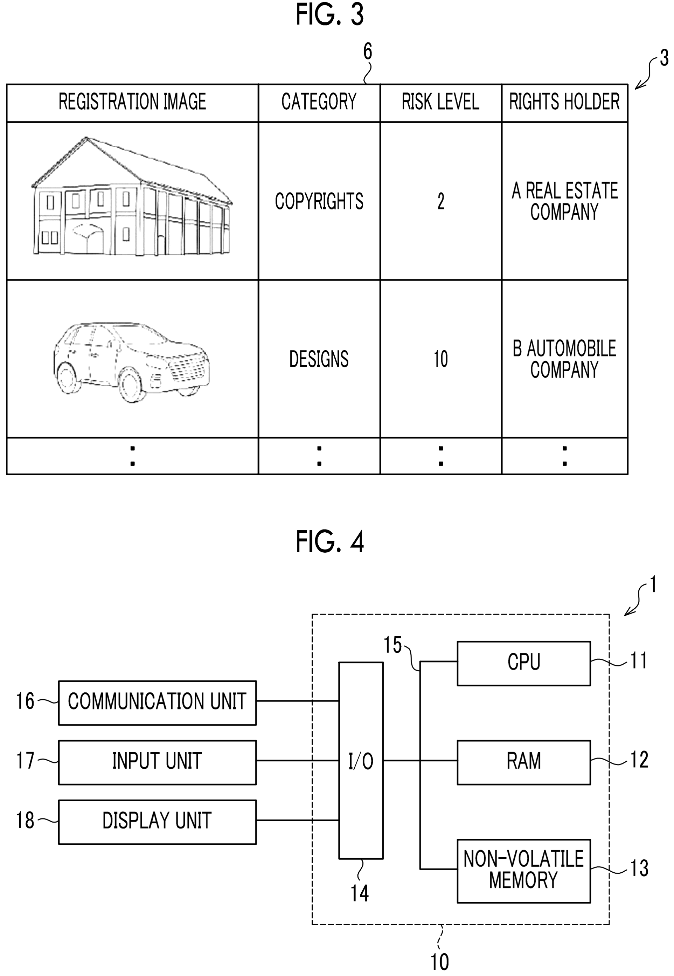

FIG. 3 is a table showing an example of the intellectual property DB 3. The intellectual property DB 3 includes each item of, for example, a registration image, a category, a risk level, and a rights holder.

The registration image is an image of an individual object having the intellectual property rights. For example, in a case where the object is a famous and aesthetic building that is copyrighted, an image of the building is set as the registration image. Further, for example, in a case where a design of the object has a feature, an image of the object having the design is set as the registration image. A uniform resource locator (URL) indicating a location of the registration image may be set as the registration image, instead of the image itself.

The category represents a type of the intellectual property rights to be protected for the object represented by the registration image. Examples of the type of the intellectual property rights include patents, utility models, trademarks, designs, portrait rights, copyrights, and trade names.

The risk level represents the ease of recognition that the infringement of the intellectual property rights of the object represented by the registration image is recognized, that is, a degree of infringement. The degree of infringement is represented by, for example, a numerical value. The degree of infringement represents that the infringement of the intellectual property rights is more likely to be recognized as the numerical value of the degree of infringement is larger. That is, the degree of infringement represents that the degree of infringement for the object represented by the registration image is higher as the numerical value of the degree of infringement is larger.

For example, designs or trademarks are registered as rights to be protected through examination by the Patent Office. That is, the infringement of designs or trademarks is more likely to be recognized as an infringement act than the infringement of copyrights obtained without undergoing examination by a public institution, for example. Thus, the risk level of the designs or the trademarks is set to be higher than the risk level of copyrights. As described above, the risk level is set according to the type of the intellectual property rights of the object represented by the registration image.

The rights holder represents a rights holder of the intellectual property rights of the object represented by the registration image. The rights holder may be a corporation or an individual. Further, there may be a plurality of rights holders.

A user who creates the intellectual property DB 3 sets each item of the intellectual property DB 3. However, the specifying unit 1C may set the risk level with reference to a corresponding category of the intellectual property rights. That is, in a case where the user sets the registration image, the category, and the rights holder, the specifying unit 1C may set the risk level with reference to the set category. In the following, the information related to the existing intellectual property included in the intellectual property DB 3 will be represented as "rights information 6". The information included in the rights information 6 is an example. Needless to say, the rights information 6 may include other information related to the intellectual property. For example, in a case where the intellectual property is a work, the rights information 6 may include a name of the work.

The output unit 1D in FIG. 1 outputs infringement information 4 indicating whether or not the infringement of the intellectual property rights of the existing intellectual property is recognized, for each object 5 extracted from the input image 2 by the extraction unit 1B, according to a specification result of the specifying unit 1C.

The output of the infringement information 4 is to put the user in a state in which the infringement information 4 can be checked. Thus, an output example of the infringement information 4 includes a form in which the infringement information 4 is transmitted to an external device (not shown) via a communication line, or a form in which the infringement information 4 is displayed on a display. Further, the output example of the infringement information 4 also includes a form in which a printer prints the infringement information 4 on paper or the like, or a form in which a storage device to which a reading authority is provided to the user stores the infringement information 4. In the present disclosure, an example will be described in which the output unit 1D displays the infringement information 4 on a display.

The storage 1E stores the intellectual property DB 3. The system 1 shown in FIG. 1 includes the storage 1E, but does not necessarily include the storage 1E. For example, the system 1 may acquire the rights information 6 from the intellectual property DB 3 stored in the storage 1E, which is connected to the system 1 via the communication line.

The system 1 that executes such processing is configured by using, for example, a computer 10.

FIG. 4 is a diagram showing a main configuration example of an electrical system of the system 1 configured by using the computer 10.

The computer 10 configuring the system 1 includes a central processing unit (CPU) 11, which is an example of a processor that is responsible for processing of each functional unit of the system 1. Further, the computer 10 includes a random access memory (RAM) 12 used as a temporary work area of the CPU 11. Further, the computer 10 includes a non-volatile memory 13 and an input/output interface (I/O) 14. The CPU 11, the RAM 12, the non-volatile memory 13, and the I/O 14 are connected to each other via a bus 15.

The non-volatile memory 13 is an example of a storage device that retains stored information even in a case where power supplied to the non-volatile memory 13 is cut off. For example, a semiconductor memory is used for the non-volatile memory 13, but a hard disk may also be used. Information that needs to be continuously stored even in a case where the power of the computer 10 is cut off, such as the rights information 6, is stored in the non-volatile memory 13.

For example, a communication unit 16, an input unit 17, and a display unit 18 are connected to the I/O 14.

The communication unit 16 is connected to the communication line, and includes a communication protocol for transmitting and receiving data to and from the external device connected to the communication line.

The input unit 17 is a device that receives an instruction from the user and notifies the CPU 11 of the instruction. For example, a button, a touch panel, a mouse, a keyboard, a pointing device, and the like are used as the input unit 17.

The display unit 18 is an example of a display device that displays, as an image, information processed by the CPU 11. For example, a liquid crystal display, an organic electro luminescence (EL) display, or the like is used as the display unit 18.

The units connected to the I/O 14 are not limited to the communication unit 16, the input unit 17, and the display unit 18. Necessary units are selected according to functions of the system 1, and are connected to the I/O 14.

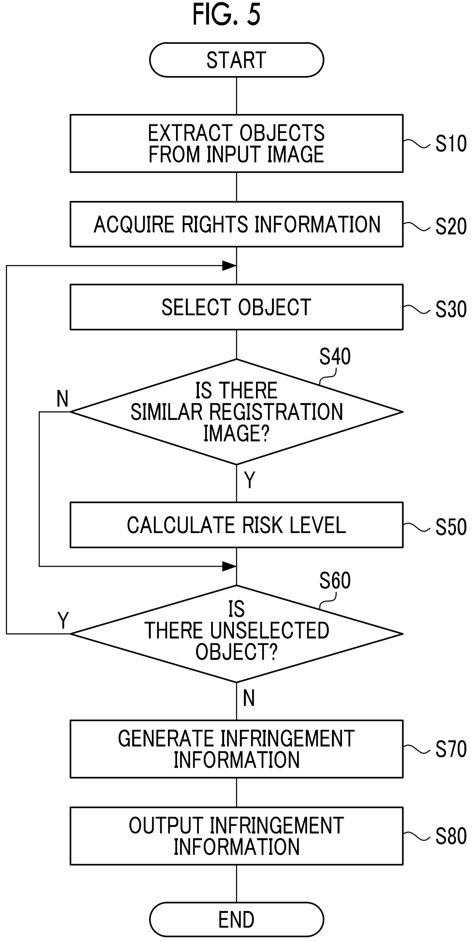

Next, infringement determination processing of the input image 2 using the system 1 will be described. FIG. 5 is a flowchart showing an example of a flow of the infringement determination processing of the input image 2 executed by the CPU 11 of the computer 10 in a case where the input image 2 is received from the user.

An information processing program that defines the infringement determination processing of the input image 2 is stored in advance in, for example, the non-volatile memory 13 of the computer 10. The CPU 11 reads the information processing program stored in the non-volatile memory 13 to execute the infringement determination processing of the input image 2. The intellectual property DB 3 is assumed to be constructed in the non-volatile memory 13, and the rights information 6 shown in FIG. 3 is assumed to be stored in advance.

First, in step S10, the CPU 11 extracts, from the received input image 2, respective objects 5 constituting the input image 2. A known method such as pattern recognition of an image or analysis of a feature amount is used for the extraction of the objects from the input image 2. Further, an artificial intelligence (AI) model may be used for the extraction of the objects from the input image 2.

In step S20, the CPU 11 acquires the rights information 6 from the non-volatile memory 13.

In step S30, the CPU 11 selects any one object 5 from among the objects 5 extracted from the input image 2 in step S10. For convenience of description, the object 5 selected in step S30 is referred to as "selected object 5".

In step S40, the CPU 11 refers to the registration image included in the rights information 6 to determine whether or not there is a registration image similar to the selected object 5. A similarity degree between the selected object 5 and the registration image is calculated, for example, by comparing the feature amounts included in respective images. In a case where a registration image having the similarity degree equal to or larger than a threshold value for the selected object 5 is obtained, the CPU 11 determines that the registration image similar to the selected object 5 is present. The CPU 11 may use the AI model in which each similarity degree is output in a case where the selected object 5 and the registration image are input to calculate the similarity degree between the selected object 5 and the registration image.

That is, the CPU 11 compares the images with each other to specify the intellectual property for which the selected object 5 may infringe the intellectual property rights. In a case where there are a plurality of the registration images having the similarity degree equal to or larger than the threshold value, the registration image having a highest similarity degree may be set as the registration image similar to the selected object 5. Further, each of the registration images having the similarity degree equal to or larger than the threshold value may be set as the registration image similar to the selected object 5. In the following, the registration image determined to be similar to the selected object 5 is referred to as "similar registration image". The similar registration image is an example of the object 5 that is recognized to infringe the intellectual property rights. For convenience of description, an example will be described in which the registration image having the highest similarity degree, among the registration images having the similarity degree equal to or larger than the threshold value, is treated as the similar registration image of the selected object 5. In a case where the similar registration image for the selected object 5 is present, the processing proceeds to step S50.

In step S50, the CPU 11 calculates the risk level that the selected object 5 infringes the intellectual property rights of the similar registration image. Specifically, the CPU 11 sets the risk level in association with the similar registration image in the rights information 6 as the risk level that the selected object 5 infringes the intellectual property rights of the similar registration image.

In this case, the CPU 11 may correct the risk level of the selected object 5 in accordance with the type of the intellectual property rights of the similar registration image. As already described, in a case where the type of the intellectual property rights of the similar registration image is the rights such as designs or trademarks granted through review by a public institution, the CPU 11 may add a predetermined value to the risk level set in the rights information 6.

Further, the CPU 11 may differentiate the risk levels even in a case where the types of the intellectual property rights are the same. For example, the type of the intellectual property rights of the similar registration image is assumed to be copyrights. In this case, since the work with a high popularity has a high familiarity of the public as compared with other works, similarity of the image is more likely to be pointed out. Thus, in a case where the similar registration image is the work with a high popularity, the CPU 11 may add a predetermined value in accordance with the popularity to the risk level in association with the similar registration image.

The CPU 11 determines the popularity of the similar registration image from the number of search hits in a case where at least one of a work name or an author name, which is represented by the similar registration image, is searched on an existing search site. An application programming interface (API) provided by the search site is used as an interface with the search site.

For example, regarding a range of the number of search hits, there is assumed to be a magnitude relationship of range A > range B > range C. In this case, an additional value of the risk level of the similar registration image of which the number of search hits is included in the range A is set to be larger than an additional value of the risk level of the similar registration image for which the number of search hits is included in the range B. Further, the additional value of the risk level of the similar registration image for which the number of search hits is included in the range B is set to be larger than an additional value of the risk level of the similar registration image for which the number of search hits is included in the range C. In addition, the additional value of the risk level of the similar registration image for which the number of search hits is included in the range C is set to, for example, "0". In this case, the risk level of the similar registration image for which the number of search hits is included in the range C is the risk level set in the rights information 6. The risk level of the similar registration image for which the number of search hits is included in the range A and the range B is set to a value larger than the risk level set in the rights information 6.

On the other hand, some of the intellectual properties are widely spread in society and have already become indispensable in life. In the present disclosure, such intellectual property will be represented as "specific intellectual property". For example, a QR code (registered trademark) is an example of the specific intellectual property. Since the specific intellectual property has been commoditized, the likelihood of being pointed out for the infringement of the rights is considered to be low simply because of the similarity to the selected object 5. Thus, in a case where the similar registration image is an image representing the specific intellectual property, the CPU 11 may subtract a predetermined value from the risk level in association with the similar registration image. That is, in a case where the similar registration image is an image representing the specific intellectual property, the CPU 11 adjusts the risk level of the selected object 5 to be lower than the risk level in association with the similar registration image.

Further, the CPU 11 may calculate the risk level of the selected object 5 by using the number of dispute cases for the intellectual property rights based on the similar registration image. The number of dispute cases for the intellectual property rights based on the similar registration image is at least one of the number of dispute cases targeting the similar registration image or the number of dispute cases in which the rights holder of the intellectual property represented by the similar registration image is involved. The dispute case includes, for example, a court case and an alternative dispute resolution (ADR).

The likelihood that a dispute related to the infringement of the rights occurs for the selected object 5 similar to the similar registration image is higher as the number of dispute cases targeting the similar registration image is larger. Further, the rights holder has a higher awareness of rights to the intellectual property as the number of dispute cases in which the rights holder of the similar registration image is involved is larger. Thus, the CPU 11 acquires the number of dispute cases for the intellectual property rights, based on the similar registration image, from the external device through, for example, the communication line. The CPU 11 adds an additional value according to the number of dispute cases to the risk level set in the rights information 6 as the number of dispute cases for the intellectual property rights based on the similar registration image is larger. The additional value according to the number of dispute cases is set to a larger value as the number of dispute cases is larger.

In this manner, the CPU 11 calculates the risk level that the selected object 5 infringes the intellectual property rights of the similar registration image, and the processing proceeds to step S60.

On the other hand, in a case where determination is made by the determination processing in step S40 that there is no similar registration image for the selected object 5, the processing proceeds to step S60 without executing the processing in step S50.

In step S60, the CPU 11 determines whether or not there is the object 5 that has not yet been selected among the objects 5 extracted from the input image 2 in step S10. In a case where unselected objects 5 are present, the processing proceeds to step S30. In step S30, the CPU 11 selects any one object 5 from the unselected objects 5, and repeatedly executes the processing of steps S40 to S60 on the newly selected object 5. Accordingly, the similar registration image and the risk level for each object 5 are obtained.

On the other hand, in a case where determination is made by the determination processing in step S60 that there is no unselected object 5, the processing proceeds to step S70.

In step S70, the CPU 11 generates the infringement information 4 for each object 5 included in the input image 2. The infringement information 4 includes, for example, the similar registration image that may infringe the intellectual property rights and the risk level representing the degree of infringement of the intellectual property rights. In addition, the CPU 11 may include the category of the intellectual property rights, the name of the rights holder, or the like, which is in association with the similar registration image, in the infringement information 4. In a case where a plurality of similar registration images are present for one object 5, the CPU 11 generates the infringement information 4 including respective similar registration images and risk levels for the object 5. The CPU 11 generates, for the object 5 for which there is no similar registration image, the infringement information 4 in association with information indicating that there may be no infringement of the intellectual property rights.

In step S80, the CPU 11 outputs, to the display unit 18, the infringement information 4 generated in step S70 to display the infringement information 4. As described above, the infringement determination processing of the input image 2 shown in FIG. 5 is ended.

In a case where there is no similar registration image in the intellectual property DB 3, the CPU 11 may collect an image similar to the selected object 5 from the Internet and register the collected image in the intellectual property DB 3. Specifically, the CPU 11 may use, for example, an image search function provided by a search site to collect the image similar to the selected object 5. Further, the CPU 11 may use a service that can search for a design similar to the image. With the collection of the image of the object from the Internet, the number of the registration images in the intellectual property DB 3 can be increased. A timing of collecting the image is not limited to a case where determination is made that there is no similar registration image in the intellectual property DB 3. For example, the CPU 11 may store each object 5, and periodically collect images similar to the object 5 obtained so far.

Further, in a case where the object 5 extracted from the input image 2 in step S10 includes a text as in the object 5 of the signboard shown in FIG. 2, the CPU 11 may acquire a type of font used for the text. In a case where the acquired type of font is copyrighted, for example, the CPU 11 preferably increases the risk level of the object 5. Information related to the presence or absence of copyrights for each font may be stored in advance in, for example, the non-volatile memory 13.

As described above, with the system 1 of the present disclosure, the objects 5 are extracted from the input image 2, and each object 5 is compared with the registration image. Therefore, even in a case where no intellectual property similar to the entire input image 2 is found, the system 1 can determine whether or not the input image 2 infringes the intellectual property rights of other intellectual properties.

### <Modification Example of Infringement Determination Processing>

In the above description, the example has been described in which the object 5 is compared with the registration image to determine whether or not the object 5 infringes the intellectual property rights of the existing intellectual property. However, a method other than the comparison between the images may be employed to determine whether or not the object 5 infringes the intellectual property rights of the existing intellectual property. In the present modification example, an aspect will be described in which a description sentence of the object 5 is used to determine whether or not the object 5 infringes the intellectual property rights of the existing intellectual property.

The description sentence of the object 5 is a character string representing what kind of object the object 5 is. That is, the description sentence of the object 5 is a character string representing contents that can cause the user to evoke the object 5. The description sentence of the object 5 is composed of, for example, a character string representing an object name, a shape, a color, a state, and the like of the object 5. In the following, the description sentence of the object 5 will be represented as "prompt" of the object 5.

Since the object 5 is represented by the prompt instead of an image, the registration image of the rights information 6 is also represented by the character string. The character string included in the rights information 6, instead of the registration image, is a description sentence describing an individual object having the intellectual property. In the following, the description sentence of the existing intellectual property included in the rights information 6 will be represented as "registration prompt".

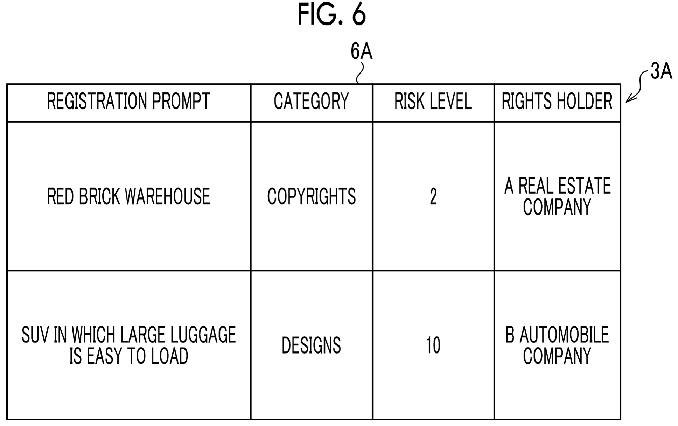

FIG. 6 is a table showing an example of an intellectual property DB 3A according to the present modification example. The intellectual property DB 3A includes, for example, each item of the registration prompt, the category, the risk level, and the rights holder, as rights information 6A. The registration prompt of the rights information 6A shown in FIG. 6 shows an example of the prompt corresponding to the registration image in the rights information 6 shown in FIG. 3. A character string of "red brick warehouse" is registered in the registration prompt of the rights information 6A shown in FIG. 6, for the registration image of the building in the rights information 6 shown in FIG. 3. Further, a character string of "SUV in which large luggage is easy to load" is registered in the registration prompt of the rights information 6A shown in FIG. 6, for the registration image of the vehicle in the rights information 6 shown in FIG. 3. The SUV is an abbreviation for "sport utility vehicle". The registration prompt may be created by the user by viewing the image of the existing intellectual property, but, for example, may be preferably created by using a service of generating the prompt from the image.

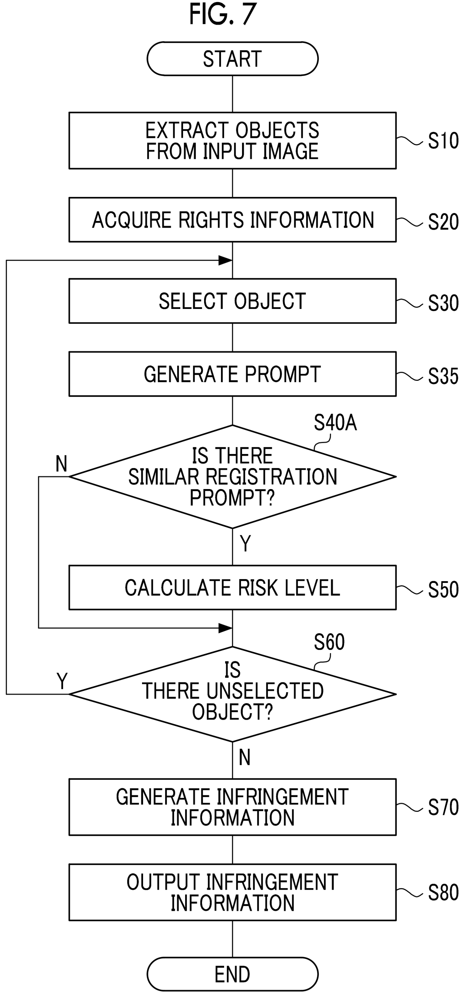

Next, the infringement determination processing of the input image 2 in the system 1 using the rights information 6A will be described. FIG. 7 is a flowchart showing an example of a flow of the infringement determination processing of the input image 2 according to the present modification example executed by the CPU 11 of the computer 10 in a case where the input image 2 is received from the user. The infringement determination processing shown in FIG. 7 is different from the infringement determination processing shown in FIG. 5 in that step S35 is added and step S40 is replaced with step S40A. Thus, the following description will focus on the difference from the infringement determination processing shown in FIG. 5.

The selected object 5 is selected in step S30, and then the processing proceeds to step S35. In step S35, the CPU 11 generates the prompt of the selected object 5. Specifically, the CPU 11 transmits the selected object 5 to an external device that provides the service of generating the prompt from the image to generate the prompt of the selected object 5. In a case where an application equivalent to the service is stored in the non-volatile memory 13, the CPU 11 can naturally generate the prompt of the selected object 5 through the application without transmitting the selected object 5 to the external device.

In step S40A, the CPU 11 refers to the registration prompt included in the rights information 6A to determine whether or not there is a registration prompt (referred to as "similar registration prompt") similar to the prompt of the selected object 5 generated in step S35. An existing method of calculating the similarity degree between character strings is used to calculate the similarity degree between the prompt of the selected object 5 and the registration prompt. Examples of the method of calculating the similarity degree between the character strings include methods using a Gestalt pattern matching, a Levenshtein distance, a cosine similarity degree between word vectors, a Jaro-winkler distance, and the like. In a case where the registration prompt having the similarity degree equal to or larger than the threshold value is obtained for the prompt of the selected object 5, the CPU 11 determines that the similar registration prompt, which is similar to the prompt of the selected object 5, is present. The CPU 11 may use the AI model in which the similarity degree between the prompt of the selected object 5 and the registration prompt is output in a case where the prompt of the selected object 5 and the registration prompt are input, in calculating the similarity degree between the prompt of the selected object 5 and the registration prompt.

That is, the CPU 11 compares the prompts of the images to specify the intellectual property for which the selected object 5 may infringe the intellectual property rights.

In the following, as already described, the processing proceeds to step S50 in a case where there is the similar registration prompt for the prompt of the selected object 5, the processing proceeds to step S60 in a case where there is no similar registration prompt, and subsequent processing is executed in each case. Accordingly, the infringement information 4 for each object 5 included in the input image 2 is obtained.

In the above description, in step S40A, the example has been described in which the CPU 11 compares the prompt itself of the selected object 5 generated in step S35 with the registration prompt. However, the prompt of the selected object 5 may include a redundant expression. In a case where the prompt of the selected object 5 includes the redundant expression, calculation accuracy of the similarity degree to the registration prompt may be decreased. Thus, the CPU 11 preferably further generates, for example, a feature word from the prompt of the selected object 5 and compares the feature word with the registration prompt to specify the similar registration prompt.

The feature word is a phrase that evokes the feature of the selected object 5, and is a phrase having a different expression from the prompt of the selected object 5. The feature word is an example of "similar sentence" according to the present disclosure. The feature word is preferably a phrase such that an image similar to the object 5 represented by the feature word is generated, for example, in a case where the feature word is input to a generation model in which an image is generated from a text. For example, the prompt of the selected object 5 is assumed to be "red brick building". In this case, "foreign residence", "red brick warehouse", "Tokyo station", and the like correspond to the feature words. For example, in a case where the prompt is input, the CPU 11 generates the feature word corresponding to the prompt of the selected object 5 by using the AI model in which the feature word is generated from the input prompt.

As described above, in the present modification example, in a case where there is the registration prompt having the similarity degree equal to or larger than the threshold value, determination is made that the selected object 5 may infringe the intellectual property rights of the existing intellectual property. However, even for the selected object 5 whose similarity degree to the registration prompt is less than the threshold value, determination may be made that the selected object 5 may infringe the intellectual property rights of the existing intellectual property.

For example, this corresponds to a case where the prompt or the feature word of the selected object 5 includes an expression that clearly evokes a specific object. In a case of the prompt clearly evoking the specific object, the selected object 5 whose contents are represented by the prompt is required to be similar to the specific object. Therefore, in a case where the prompt or the feature word of the selected object 5 includes the expression that clearly evokes the specific object, the CPU 11 determines that the selected object 5 may infringe the intellectual property rights of the existing intellectual property, regardless of the similarity degree with the registration prompt. The expression that clearly evokes the specific object is registered in advance in a registration table, for example. The CPU 11 refers to the registration table stored in the non-volatile memory 13 to determine whether or not the selected object 5 may infringe the intellectual property rights of the existing intellectual property. In a case where the prompt or the feature word of the selected object 5 includes an expression registered in the registration table, the CPU 11 sets the risk level of the selected object 5 to the maximum.

As in the collection work of the registration image described above, in a case where there is no similar registration prompt in the intellectual property DB 3A, the CPU 11 may collect a sentence similar to the prompt of the selected object 5 from the Internet to register the collected sentence in the intellectual property DB 3A. With the collection of the description sentence of the object from the Internet, the number of registration prompts of the intellectual property DB 3A can be increased. A timing of collecting the description sentence is not limited to a case where determination is made that there is no similar registration prompt in the intellectual property DB 3A. For example, the CPU 11 may store the prompt of each object 5, and periodically collect the description sentence similar to the prompt obtained so far.

As described above, with the system 1 of the present modification example, the object 5 is extracted from the input image 2, and the prompt of the extracted object 5 is compared with the registration prompt. Therefore, even in a case where no intellectual property similar to the entire input image 2 is found, the system 1 can determine whether or not the input image 2 infringes the intellectual property rights of the existing intellectual property.

Although one aspect of the system 1 has been described above using the exemplary embodiment, the disclosed form of the system 1 is an example. The form of the system 1 is not limited to the range described in the exemplary embodiment. Various changes or improvements can be made to the exemplary embodiment without departing from the gist of the present disclosure. Such changed or improved forms are also included within the technical scope of the present disclosure. For example, the internal processing order in the infringement determination processing of the input image 2 shown in FIGS. 5 and 7 may be changed without departing from the gist of the present disclosure.

Further, in the above exemplary embodiment, the form has been described as an example in which the infringement determination processing of the input image 2 shown in FIGS. 5 and 7 is realized by software. However, the identical processing shown in the flowchart may be processed by hardware. In this case, the processing speed is increased as compared with the case where the infringement determination processing of the input image 2 is realized by software.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program in the present disclosure may be provided as a program product.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

Furthermore, the system 1 may download the information processing program from an external device through the communication unit 16, and store the downloaded information processing program in the non-volatile memory 13.

Supplementary notes according to the present exemplary embodiment are shown below.
(((1))) An information processing system comprising:
   a processor configured to:
   extract, from an image, partial images corresponding to components of the image, as objects; and
   output, for each of the objects, infringement information indicating whether or not an infringement of intellectual property rights against an existing intellectual property is recognized.
(((2))) The information processing system according to (((1))), wherein the processor is configured to:
   acquire, from a storage device, information related to the intellectual property; and
   compare a feature of the object with a feature of the intellectual property represented by the information related to the intellectual property to specify the intellectual property for which the object is likely to infringe the intellectual property rights.
(((3))) The information processing system according to (((2))),
   wherein the information related to the intellectual property includes an image of the intellectual property, and
   the processor is configured to:
      compare the object with the image of the intellectual property to specify the intellectual property for which the object is likely to infringe the intellectual property rights.
(((4))) The information processing system according to (((2))),
   wherein the information related to the intellectual property includes a description sentence of the intellectual property, and
   the processor is configured to:
      compare a description sentence of the object with the description sentence of the intellectual property to specify the intellectual property for which the object is likely to infringe the intellectual property rights.
(((5))) The information processing system according to (((4))), wherein the processor is configured to:
   generate, from the description sentence of the object, a similar sentence that is a sentence for evoking the feature of the object and that has a different expression from the description sentence of the object; and
   compare the similar sentence with the description sentence of the intellectual property to specify the intellectual property for which the object is likely to infringe the intellectual property rights.
(((6))) The information processing system according to (((5))),
   wherein the similar sentence is a sentence that generates the object represented by the similar sentence in a case where the similar sentence is input to a generation model in which an image is generated from a text.
(((7))) The information processing system according to any one of (((4))) to (((6))), wherein the processor is configured to:
   in a case where the description sentence of the object includes a predetermined expression for evoking the intellectual property, output that the object infringes the intellectual property rights of the intellectual property, which is evoked by the predetermined expression.
(((8))) The information processing system according to any one of (((1))) to (((7))), wherein the processor is configured to:
   output, for each object whose infringement of the intellectual property rights is recognized, a degree of infringement of the intellectual property rights against the intellectual property.
(((9))) The information processing system according to (((8))), wherein the processor is configured to:
   set the degree of infringement for each object in accordance with a type of the intellectual property rights of the intellectual property.
(((10))) The information processing system according to (((9))), wherein the processor is configured to:
   in a case where the intellectual property is a work, adjust the degree of infringement in accordance with a popularity of the work.
(((11))) The information processing system according to (((10))), wherein the processor is configured to:
   set the popularity of the work in accordance with the number of search hits in a case where at least one of a name of the work or an author name is searched for on a search site.
(((12))) The information processing system according to any one of (((8))) to (((11))), wherein the processor is configured to:
   use at least one of the number of dispute cases targeting the intellectual property or the number of dispute cases in which a rights holder of the intellectual property is involved to adjust the degree of infringement set according to a type of the intellectual property rights.
(((13))) The information processing system according to any one of (((8))) to (((12))), wherein the processor is configured to:
   in a case where the intellectual property is a predetermined specific intellectual property that has already spread in society,
   adjust the degree of infringement to be lower than the degree of infringement set according to a type of the intellectual property rights.
(((14))) An information processing program for causing a computer to execute a process comprising:
   extracting, from an image, partial images corresponding to components of the image, as objects; and
   outputting, for each of the objects, infringement information indicating whether or not an infringement of intellectual property rights against an existing intellectual property is recognized.

With the information processing system according to (((1))) and the information processing program according to (((14))), there is an effect that determination can be made whether or not the image includes the element that infringes the intellectual property rights.

With the information processing system according to (((2))), there is an effect that determination can be made whether or not the intellectual property rights are infringed for each object of the image.

With the information processing system according to (((3))), there is an effect that determination can be made whether or not the object infringes the intellectual property rights based on the image.

With the information processing system according to (((4))), there is an effect that determination can be made whether or not the object infringes the intellectual property rights based on the sentence expressing the object.

With the information processing system according to (((5))), there is an effect that determination can be accurately made whether or not the object infringes the intellectual property rights, as compared with a case where the description sentence of the object is used for comparison with the description sentence of the intellectual property.

With the information processing system according to (((6))), there is an effect that the expression of the similar sentence is brought closer to the expression that can evoke the object.

With the information processing system according to (((7))), there is an effect that determination can be made that the object infringes the intellectual property rights without calculating the similarity degree between the description sentence of the object and the description sentence of the intellectual property.

With the information processing system according to (((8))), there is an effect that the user can check the degree of infringement of the intellectual property rights.

With the information processing system according to (((9))), there is an effect that the accuracy of the degree of infringement can be improved, as compared with a case where the degree of infringement is set regardless of the type of the intellectual property rights.

With the information processing system according to (((10))), there is an effect that the accuracy of the degree of infringement can be improved, as compared with a case where the same degree of infringement is set for any work.

With the information processing system according to (((11))), there is an effect that the popularity of the work can be quantitatively set.

With the information processing system according to (((12))), there is an effect that the degree of infringement of the intellectual property rights can be set from a viewpoint different from the similarity degree of the object.

With the information processing system according to (((13))), there is an effect that, even in a case where the object is similar to an object having the intellectual property rights, the degree of infringement of the intellectual property rights can be adjusted according to an actual use in society.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system (system)
1A: reception unit
1B: extraction unit
1C: specifying unit
1D: output unit
1E: storage
2: input image
3 (3A): intellectual property
DB4: infringement information
5: (selected) object
6(6A): rights information
10: computer
11: CPU
12: RAM
13: non-volatile memory
14: I/O
15: bus
16: communication unit
17: input unit
18: display unit

## Claims

1. An information processing system comprising:
a processor configured to:
extract, from an image, partial images corresponding to components of the image, as objects; and
output, for each of the objects, infringement information indicating whether or not an infringement of intellectual property rights against an existing intellectual property is recognized.

2. The information processing system according to claim 1, wherein the processor is configured to:
acquire, from a storage device, information related to the intellectual property; and
compare a feature of the object with a feature of the intellectual property represented by the information related to the intellectual property to specify the intellectual property for which the object is likely to infringe the intellectual property rights.

3. The information processing system according to claim 2,
wherein the information related to the intellectual property includes an image of the intellectual property, and
the processor is configured to:
compare the object with the image of the intellectual property to specify the intellectual property for which the object is likely to infringe the intellectual property rights.

4. The information processing system according to claim 2,
wherein the information related to the intellectual property includes a description sentence of the intellectual property, and
the processor is configured to:
compare a description sentence of the object with the description sentence of the intellectual property to specify the intellectual property for which the object is likely to infringe the intellectual property rights.

5. The information processing system according to claim 4, wherein the processor is configured to:
generate, from the description sentence of the object, a similar sentence that is a sentence for evoking the feature of the object and that has a different expression from the description sentence of the object; and
compare the similar sentence with the description sentence of the intellectual property to specify the intellectual property for which the object is likely to infringe the intellectual property rights.

6. The information processing system according to claim 5,
wherein the similar sentence is a sentence that generates the object represented by the similar sentence in a case where the similar sentence is input to a generation model in which an image is generated from a text.

7. The information processing system according to any one of claims 4 to 6, wherein the processor is configured to:
in a case where the description sentence of the object includes a predetermined expression for evoking the intellectual property, output that the object infringes the intellectual property rights of the intellectual property, which is evoked by the predetermined expression.

8. The information processing system according to any one of claims 1 to 7, wherein the processor is configured to:
output, for each object whose infringement of the intellectual property rights is recognized, a degree of infringement of the intellectual property rights against the intellectual property.

9. The information processing system according to claim 8, wherein the processor is configured to:
set the degree of infringement for each object in accordance with a type of the intellectual property rights of the intellectual property.

10. The information processing system according to claim 9, wherein the processor is configured to:
in a case where the intellectual property is a work, adjust the degree of infringement in accordance with a popularity of the work.

11. The information processing system according to claim 10, wherein the processor is configured to:
set the popularity of the work in accordance with the number of search hits in a case where at least one of a name of the work or an author name is searched for on a search site.

12. The information processing system according to any one of claims 8 to 11, wherein the processor is configured to:
use at least one of the number of dispute cases targeting the intellectual property or the number of dispute cases in which a rights holder of the intellectual property is involved to adjust the degree of infringement set according to a type of the intellectual property rights.

13. The information processing system according to any one of claims 8 to 12, wherein the processor is configured to:
in a case where the intellectual property is a predetermined specific intellectual property that has already spread in society,
adjust the degree of infringement to be lower than the degree of infringement set according to a type of the intellectual property rights.

14. An information processing program for causing a computer to execute a process comprising:
extracting, from an image, partial images corresponding to components of the image, as objects; and
outputting, for each of the objects, infringement information indicating whether or not an infringement of intellectual property rights against an existing intellectual property is recognized.

15. An information processing method comprising:
extracting, from an image, partial images corresponding to components of the image, as objects; and
outputting, for each of the objects, infringement information indicating whether or not an infringement of intellectual property rights against an existing intellectual property is recognized.
